(19) Europäisches Patentamt
European Patent Office
Office européen des brevets

(11) **EP 1 403 746 B1**

(12) **EUROPÄISCHE PATENTSCHRIFT**

(45) Veröffentlichungstag und Bekanntmachung des Hinweises auf die Patenterteilung:
**02.01.2013 Patentblatt 2013/01**

(51) Int Cl.:
*B25J 9/16* *(2006.01)* *G05B 19/4062* *(2006.01)*
*G05B 19/4061* *(2006.01)*

(21) Anmeldenummer: **03021376.3**

(22) Anmeldetag: **22.09.2003**

(54) **Verfahren zur Kollisionserkennung**

Collision detection method

Méthode de détection de collision

(84) Benannte Vertragsstaaten:
**AT BE BG CH CY CZ DE DK EE ES FI FR GB GR HU IE IT LI LU MC NL PT RO SE SI SK TR**

(30) Priorität: **30.09.2002 DE 10245594**

(43) Veröffentlichungstag der Anmeldung:
**31.03.2004 Patentblatt 2004/14**

(73) Patentinhaber: **Dürr Systems GmbH**
**74321 Bietigheim-Bissingen (DE)**

(72) Erfinder:
• **Hooge, Sven**
**73240 Wendlingen (DE)**

• **Wildermuth, Dietmar, Dr.**
**70193 Stuttgart (DE)**

(74) Vertreter: **Heusler, Wolfgang**
**v. Bezold & Partner**
**Patentanwälte**
**Akademiestrasse 7**
**80799 München (DE)**

(56) Entgegenhaltungen:
**WO-A-98/51453      JP-A- 2000 052 286**
**JP-A- 2000 099 105      JP-A- 2001 051 721**

**Beschreibung**

Die Erfindung betrifft ein Überwachungsverfahren für ein Antriebssystem mit einem Motor und einem von dem Motor angetriebenen beweglichen Teil, gemäß dem Oberbegriff des Anspruchs 1.

Derartige Antriebssysteme werden beispielsweise in modernen Lackieranlagen zur Lackierung von Kraftfahrzeugkarosserien in Form von mehrachsigen Lackierroboter eingesetzt, die einen Zerstäuber programmgesteuert führen, um ein optimales Lackierergebnis zu erreichen.

Hierbei muss eine Kollision des Lackierroboters mit Raumbegrenzungen, Hindernissen oder Personen rechtzeitig erkannt werden, um eine Beschädigung des Lackierroboters oder eine Verletzung von Personen durch den Lackierroboter zu verhindern.

Aus WO98/51453 ist ein Überwachungsverfahren für einen Roboter bekannt, das eine Kollisionserkennung ermöglicht. Hierbei wird die Rückwirkung der Mechanik auf den Antrieb des Roboters ausgewertet und in Abhängigkeit davon ein Fehlersignal erzeugt.

Falls der Roboter beispielsweise an ein feststehendes Hindernis wie eine Gebäudewand anstößt, so wirkt eine Störkraft auf den Roboter, die auf den Antrieb zurückwirkt, indem der Antrieb festgebremst wird. Bei einer Kollision mit einem nachgiebigen Hindernis wirkt ebenfalls eine Störkraft auf den Roboter, die jedoch lediglich zu einer Abbremsung der Roboterbewegung führt. In beiden Kollisionsfällen weichen jedoch die Bewegungsgrößen des Antriebs, wie beispielsweise die Winkelstellung und die Drehgeschwindigkeit der Motorwelle, zumindest kurzfristig von den störungsfreien Werten ab.

Das bekannte Überwachungsverfahren sieht deshalb vor, das an dem zu überwachenden Roboter antriebsseitig Bewegungsgrößen gemessen werden, wie beispielsweise die Winkelstellung und Drehgeschwindigkeit der Motorwelle. Das Fehlersignal für die Kollisionserkennung wird dann aus den antriebsseitig gemessenen Bewegungsgrößen und den vorgegebenen Regel- bzw. Steuergrößen zur Ansteuerung des Antriebs unter Berücksichtigung eines dynamischen Modells des Antriebs und der Mechanik berechnet. Das dynamische Modell berücksichtigt beispielsweise die mechanische Trägheit des Antriebs und der angetriebenen Mechanik sowie die Elastizität der mechanischen Kopplung zwischen Antrieb und Mechanik.

Nachteilig an diesem bekannten Überwachungsverfahren zur Kollisionserkennung ist jedoch die Tatsache, dass die mechanische Rückwirkung einer kollisionsbedingten Störkraft von der Mechanik auf den Antrieb durch ein zwischengeschaltetes Getriebe stark verringert wird. So werden beispielsweise bei Lackierrobotern zwischen dem Antrieb und der Mechanik Getriebe mit einer Übersetzung von mehr als 1:100 eingesetzt, so dass die mechanische Rückwirkung auf den Antrieb nur schwer messbar ist.

Ein weiterer Nachteil des bekannten Überwachungsverfahrens besteht darin, dass Fehlmodellierungen des Antriebs zu großen Fehlern führen, da die Rückwirkung der Mechanik auf den Antrieb dann falsch angesetzt wird.

Nachteilig an dem bekannten Überwachungsverfahren ist schließlich auch die Tatsache, dass antriebsseitig die Winkelstellung gemessen wird, während die Beschleunigung durch zweimalige Ableitung des Messwerts berechnet wird. Diese zweimalige Ableitung des Messwerts führt jedoch zu einem stark verrauschten Signal.

Ähnliche Überwachungsverfahren sind bekannt aus JP 2000 052286 A, JP 2001 051721 A und JP 2000 099105 A. Auch bei diesen bekannten Überwachungsverfahren werden jedoch nur antriebsseitige

Bewegungsgrößen des Motors gemessen, so dass die mechanische Rückwirkung einer kollisionsbedingten Störkraft von der Mechanik auf den Antrieb durch das zwischengeschaltete Getriebe stark verringert wird.

Der Erfindung liegt somit die Aufgabe zugrunde, das vorstehend beschriebene bekannte Überwachungsverfahren zur Kollisionserkennung so zu verbessern, das die Kollisionserkennung auch bei eieinem zwischengeschalteten Getriebe mit möglichst geringem Messaufwand, hoher Zuverlässigkeit und schneller Reaktionszeit möglich ist.

Die Aufgabe wird, ausgehend von dem eingangs beschriebenen bekannten Überwachungsverfahren gemäß dem Oberbegriff des Anspruchs 1, durch die kennzeichnenden Merkmale des Anspruchs 1 gelöst.

Die Erfindung umfasst die allgemeine technische Lehre, zur Bestimmung des Fehlersignals nicht nur antriebsseitig Bewegungsgrößen des Antriebssystems zu messen, sondern auch abtriebsseitig, d.h. an der angetriebenen Mechanik.

Vorteilhaft an einer derartigen zusätzlichen abtriebsseitigen Messung von Bewegungsgrößen ist die Tatsache, das die Bestimmung des Fehlersignals durch ein zwischengeschaltetes Getriebe weniger verfälscht wird. Das erfindungsgemäße Überwachungsverfahren zur Kollisionserkennung ist deshalb auch bei Antriebssystemen einsetzbar, die ein Getriebe mit einem hohen Übersetzungsfaktor aufweisen.

Ein weiterer Vorteil des erfindungsgemäßen Überwachungsverfahrens ist die Tatsache, dass nicht auf Steuer- oder Regelgrößen zurückgegriffen werden muss, so dass das erfindungsgemäße Überwachungsverfahren unabhängig von Typ und Struktur der Antriebsregelung bzw. -steuerung ist.

Aus den abtriebsseitig gemessenen Bewegungsgrößen der angetriebenen Mechanik und den antriebsseitig gemessenen Bewegungsgrößen wird erfindungsgemäß ein Fehlersignal berechnet, das eine Kollisionserkennung ermöglicht.

Gemäß der Erfindung wird aus den abtriebsseitig gemessenen Bewegungsgröße und aus den antriebsseitig gemessenen Bewegungsgrößen jeweils ein Vergleichswert für die Antriebskraft bzw. das Antriebsmoment des Motors berechnet, wobei vorzugsweise ein dynamisches Modell des Antriebssystems bzw. der Mechanik berücksichtigt wird. Das dynamische Modell bildet beispielsweise die Trägheit, elastische Komponenten sowie Reibungskräfte bzw. -momente des Antriebssystems bzw. der Mechanik nach. Bei einem störungsfreien Betrieb des Antriebssystems müssen die beiden Vergleichswerte übereinstimmen, wohingegen eine Abweichung zwischen den beiden Vergleichswerten auf eine Störung oder gar eine Kollision schließen läßt.

Die Berechnung der Vergleichswerte für die Antriebskraft bzw. das Antriebsmoment kann antriebsseitig und/oder abtriebsseitig durch ein rekursives Rechenverfahren erfolgen, wie es beispielsweise in FEATHERSTONE, Roy: "Robot Dynamics Algorithms", Kapitel 4 (Kluwer Academic Publishers, 1987) beschrieben ist.

Bei den antriebsseitig gemessenen Bewegungsgrößen handelt es sich vorzugsweise um die Stellung, die Geschwindigkeit und/oder die Beschleunigung des Motors. Hierbei reicht es aus, nur eine dieser Bewegungsgrößen zu messen, während die beiden anderen Bewegungsgrößen durch zeitliche Differentiation bzw. Integration aus der gemessenen Bewegungsgröße ermittelt werden können. Beispielsweise ist es möglich, nur die Drehgeschwindigkeit der Motorwelle zu messen, wobei sich die Beschleunigung der Motorwelle durch Differenziation der gemessenen Drehgeschwindigkeit ergibt, während die Winkelstellung der Motorwelle durch Integration der gemessenen Drehgeschwindigkeit berechnet werden kann.

Beispielsweise wird als antriebsseitige Bewegungsgröße unter anderem die Beschleunigung des Motors gemessen. Eine derartige direkte Messung der Beschleunigung bietet gegenüber einer Ableitung der Beschleunigung aus der gemessenen Geschwindigkeit oder gar der gemessenen Stellung eine höhere Genauigkeit. So führt beispielsweise eine zweimalige Differentiation der gemessenen Winkelstellung der Motorwelle zu einem stark verrauschten Signal.

Als abtriebsseitige Bewegungsgrößen können dagegen die Stellung, die Geschwindigkeit und/oder die Beschleunigung der angetriebenen Mechanik gemessen werden. Auch hierbei reicht es grundsätzlich aus, nur eine dieser Bewegungsgrößen zu messen, während die beiden anderen Bewegungsgrößen durch zeitliche Differentiation bzw. Integration aus der gemessenen Bewegungsgröße ermittelt werden können. Beispielsweise ist es möglich, nur die Geschwindigkeit der Mechanik zu messen, wobei sich die Beschleunigung der Mechanik durch Differenziation der gemessenen Geschwindigkeit ergibt, während die Stellung der Mechanik durch Integration der gemessenen Geschwindigkeit berechnet werden kann.

Vorzugsweise wird jedoch als abtriebsseitige Bewegungsgröße unter anderem die Beschleunigung der Mechanik gemessen. Eine derartige direkte Messung der Beschleunigung bietet gegenüber einer Ableitung der Beschleunigung aus der gemessenen Geschwindigkeit oder gar der gemessenen Stellung eine höhere Genauigkeit. So führt beispielsweise eine zweimalige Differentiation der gemessenen Stellung der Mechanik zu einem stark verrauschten Signal.

Bei einem mehrachsigen Antriebssystem kann das Fehlersignal vorzugsweise getrennt für die einzelnen Achsen des Antriebssystems bestimmt werden. Das Fehlersignal für die einzelnen Achsen kann hierbei jeweils Komponenten eines Fehlervektors bilden. Bei der Auswertung wird dann vorzugsweise ein skalarer Fehlerwert berechnet, um auch Kollisionen erkennen zu können, die sich nur auf mehrere Achsen des Antriebssystems auswirken.

Darüber hinaus werden vorzugsweise auch die beiden Vergleichswerte für die Antriebskraft bzw. das Antriebsmoment für jede Achse getrennt bestimmt. Aufgrund der Wechselwirkung zwischen den einzelnen Achsen werden jedoch bei der Berechnung der Vergleichswerte in den einzelnen Achsen vorzugsweise auch die für die anderen Achsen gemessenen Bewegungsgrößen berücksichtigt.

Zur Unterdrückung von kurzzeitigen Messfehlern wird vorzugsweise ein gleitender Mittelwert des Fehlersignals gebildet. Der auf diese Weise bestimmte Mittelwert wird dann vorzugsweise mit einem vorgegebenen Grenzwert verglichen. Beim Überschreiten des Grenzwerts wird dann angenommen, dass eine Kollision vorliegt.

Darüber hinaus ermöglicht das erfindungsgemäße Überwachungsverfahren auch eine Erkennung von schleichenden Störungen des Antriebssystems, wie beispielsweise bei einem Lagerschaden, wenn sich die Reibung des Antriebssystems erhöht. Hierzu wird vorzugsweise ein gleitender Mittelwert des Fehlersignals über einen längeren Zeitraum gebildet. Der auf diese Weise gebildete Mittelwert wird dann mit einem vorgegebenen Grenzwert verglichen. Beim Überschreiten des Grenzwerts wird dann angenommen, dass ein Lagerschaden vorliegt, was durch eine Warnmeldung angezeigt werden kann.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:

Figur 1     ein physikalisches Ersatzschaltbild eines Elektromotors mit einem Getriebe und einer schwingungsfähigen Mechanik,

Figur 2     ein regelungstechnisches Ersatzschaltbild eines Elektromotors und einer schwingungsfähigen Mechanik eines Roboters,

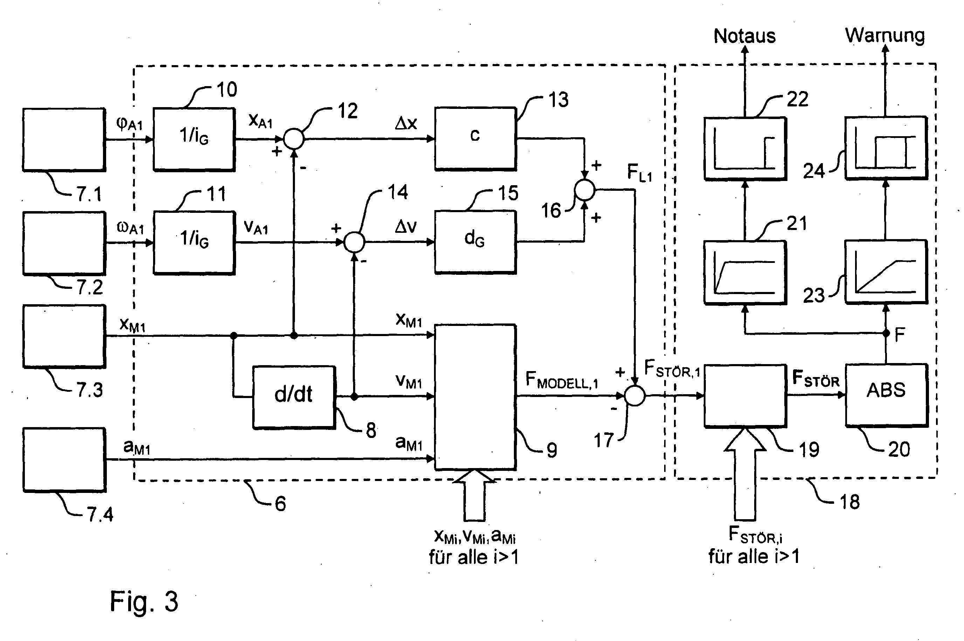

Figur 3      eine erfindungsgemäße Überwachungseinrichtung.

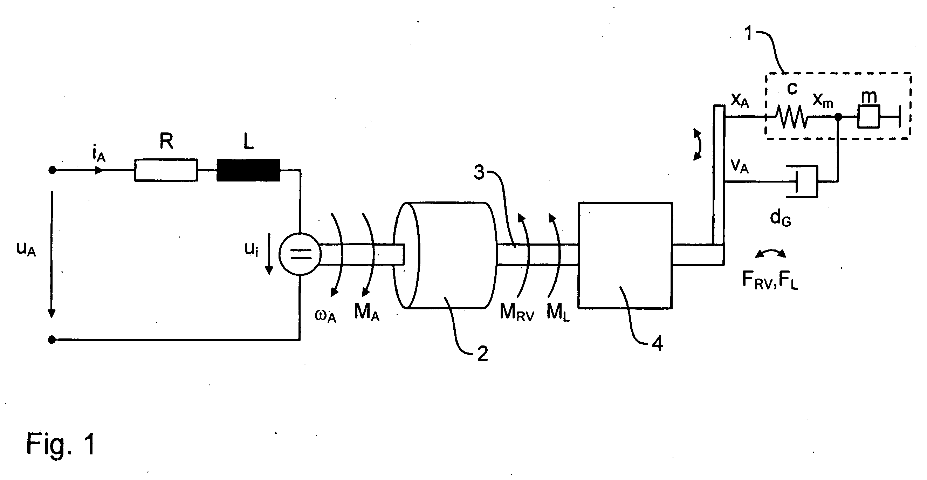

Das physikalische Ersatzschaltbild in Figur 1 zeigt ein herkömmliches elektromechanisches Antriebssystem zum Antrieb einer Achse 1 eines Lackierroboters, wobei zum Antrieb der anderen Achsen des Lackierroboters weitere Antriebssysteme vorgesehen sind, die ähnlich aufgebaut sind und deshalb zur Vereinfachung nicht beschrieben werden.

Die Achse 1 der Lackierroboters ist in dem physikalischen Ersatzschaltbild durch eine Masse m und ein Federelement c nachgebildet, während die Dämpfung der Achse 1 bei diesem Ausführungsbeispiel vernachlässigt wird.

Der Antrieb der Achse 1 erfolgt hierbei durch einen fremderregten Gleichstrommotor, der in dem physikalischen Ersatzschaltbild als Reihenschaltung aus dem ohmschen Widerstand R des Ankers, der Induktivität L des Ankers und der vom Läufer 2 induzierten Spannung $u_i$ dargestellt ist. Für die Ankerspannung $u_A$ gilt also in komplexer Schreibweise:

$$u_A = R \cdot i_A + s \cdot L \cdot i_A + u_i \qquad\qquad (1)$$

Der Gleichstrommotor ist über eine Antriebswelle 3 und ein Getriebe 4 mit der Achse 1 verbunden, wobei das Getriebe 4 die Rotationsbewegung der Antriebswelle 3 in eine anderweitige Rotationsbewegung umwandelt.

Die in dem Ankerkreis induzierte Spannung $u_i$ ergibt sich dann aus der Motorkonstanten $K_M$ und der Winkelgeschwindigkeit $\omega_A$ der Antriebswelle 3 nach folgender Formel:

$$u_i = K_M \cdot \omega_A \qquad\qquad (2)$$

Weiterhin ergibt sich das Antriebsmoment $M_A$ des Gleichstrommotors als Produkt aus dem Ankerstrom $i_A$ und der Motorkonstanten $K_M$:

$$M_A = K_M \cdot i_A \qquad\qquad (3)$$

Andererseits wirkt auf die Achse 1 eine Reibkraft $F_{RV}$, die über das Getriebe 4 in ein Reibmoment $M_{RV}$ umgewandelt wird:

$$M_{RV} = \frac{F_{RV}}{i_G} = \frac{v_A \cdot d_G}{i_G} = \omega_A \cdot d_G \qquad\qquad (4)$$

Darüber hinaus wirkt auch eine Last $F_L$ auf die Achse 1, die von dem Getriebe 4 in ein Lastmoment umgewandelt wird:

$$M_L = \frac{F_L}{i_G} = \frac{c \cdot (x_A - x_m) + d_G \cdot (v_A - v_m)}{i_G}$$

Die Antriebswelle 3 wird also durch das Antriebsmomemt $M_A$ beschleunigt und durch das Reibmoment $M_{RV}$ sowie durch das Lastmoment $M_L$ abgebremst. Unter Berücksichtigung des Trägheitsmoments $J_A$ des Antriebs ergibt sich dann folgende Beschleunigung $d\omega_A/dt$ der Antriebswelle 3:

$$\frac{d\omega}{dt} = \frac{M_A - M_L - M_{RV}}{J_A} \qquad\qquad (5)$$

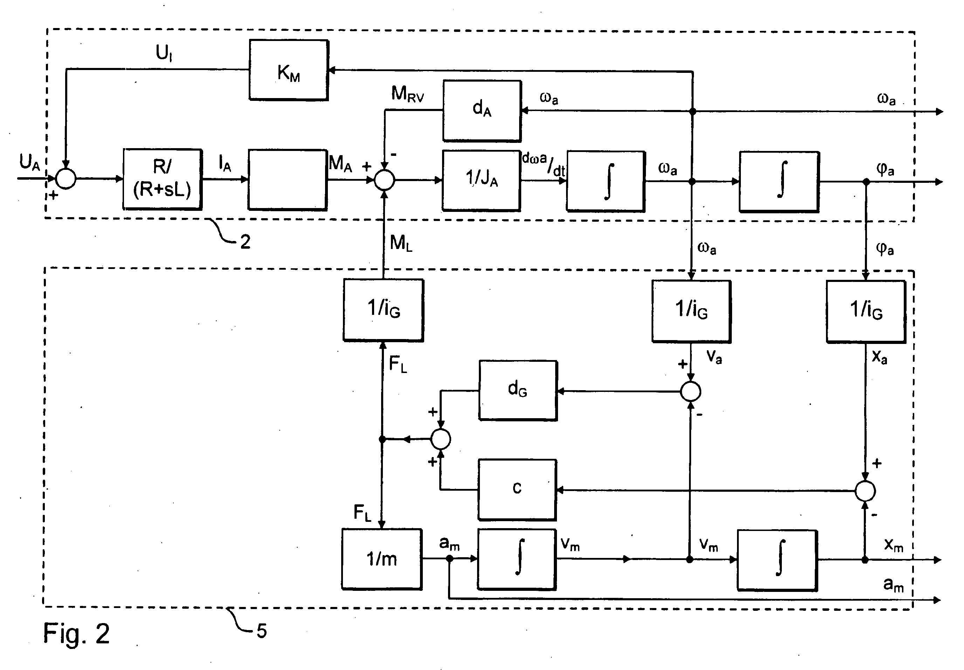

Das Blockschaltbild in Figur 2 zeigt dagegen ein regelungstechnisches Ersatzschaltbild des Gleichstrommotors und einer Mechanik 5, wobei die Mechanik 5 aus der Achse 1 und dem Getriebe 4 besteht.

Die Berechnung der einzelnen elektrischen und mechanischen Größen erfolgt hierbei entsprechend den vorstehend aufgeführten Formeln, wie unmittelbar aus Figur 2 ersichtlich ist.

Die vorstehend aufgeführten Formeln gelten jedoch nur für den Fall einer ungestörten Bewegung der Achse 1. Falls die Bewegung der Achse 1 dagegen gestört wird, so wirken zusätzlich zu der Reibkraft $F_{RV}$ und der Last $F_L$ weitere Kräfte auf die Achse 1, die zu Abweichungen des tatsächlichen Systemverhaltens von dem idealisierten Modellverhalten führen.

Falls beispielsweise ein Lackierroboter an der Wand einer Lackierkabine anstößt, so wird die Bewegung des Lackierroboters stark abgebremst. Auch bei einem Lagerschaden folgt der Lackierroboter nicht exakt dem modellierten Verhalten, da die Reibung durch den Lagerschaden stark erhöht ist und in den vorstehend aufgeführten Gleichungen nicht berücksichtigt wird. In derartigen Fällen sollte der Fehler möglichst schnell erkannt werden, um Gegenmaßnahmen einleiten zu können.

Es ist deshalb für jede Achse des Lackierroboters eine Überwachungseinrichtung 6 vorgesehen, die eine Abweichung des tatsächlichen Verhaltens des Antriebssystems von dem modellierten Verhalten erkennt. Zur Vereinfachung ist hier nur die Überwachungseinrichtung 6 für die erste Achse dargestellt, jedoch sind die Überwachungseinrichtungen für die anderen Achsen identisch aufgebaut.

Die Überwachungseinrichtung 6 ist eingangsseitig mit mehreren Sensoren 7.1-7.4 verbunden, wobei die Sensoren 7.1 und 7.2 die Winkelgeschwindigkeit $\omega_{A1}$ bzw. die Winkelstellung $\varphi_{A1}$ der Antriebswelle 3 messen, während die Sensoren 7.3 und 7.4 die Position $x_m$ der Achse 1 bzw. die Beschleunigung $a_m$ der Achse 1 erfassen.

Alternativ hierzu ist es auch möglich, dass lediglich ein Sensor zur Messung einer antriebsseitigen Bewegungsgröße und ein Sensor zur Messung einer abtriebsseitigen Bewegungsgröße vorgesehen ist, wobei weitere Bewegungsgrößen aus den Messwerten ermittelt werden können. Dies kann beispielsweise durch zeitliches Differenzieren bzw. Integrieren der Messwerte oder durch Einsatz eines sogenannten Beobachters geschehen,.

Die Position $x_{m1}$ der Achse 1 wird dann einem Differenzierer 8 zugeführt, der die Geschwindigkeit $v_{m1}$ der Achse 1 als zeitliche Ableitung der Position $x_{m1}$ berechnet, so dass eine Messung der Geschwindigkeit $v_{m1}$ in diesem Ausführungsbeispiel nicht erforderlich ist.

Die Position $x_{m1}$, die Geschwindigkeit $v_{m1}$ und die Beschleunigung $a_{m1}$ der Achse 1 werden dann einer Recheneinheit 9 zugeführt, die anhand eines vorgegebenen Modells und unter Berücksichtigung der entsprechenden Bewegungsgrößen $x_{mi}$, $v_{mi}$ und $a_{mi}$ der anderen Achsen einen modellbasierten Wert $F_{MODELL,1}$ für die auf die Achse 1 wirkende Kraft berechnet. Die Berechnung des modellbasierten Wertes $F_{MODELL,1}$ erfolgt hierbei also aus lastseitigen Messdaten.

Darüber hinaus berechnet die Überwachungseinrichtung 6 aus antriebsseitigen Messdaten einen Vergleichswert $F_{L1}$ für die auf die Achse 1 wirkende Kraft. Hierzu weist die Überwachungseinrichtung 6 zwei Recheneinheiten 10, 11 auf, welche die gemessene Winkelgeschwindigkeit $\omega_{A1}$ und die gemessene Winkelstellung $\varphi_{A1}$ der Antriebswelle 3 unter Berücksichtigung der Getriebeübersetzung $i_G$ auf entsprechende Werte $v_{A1}$ und $x_{A1}$ umrechnen.

Der antriebsseitig ermittelte Stellweg $x_{A1}$ wird dann einem Subtrahierer 12 zugeführt, der die Differenz $\Delta x = x_{A1} - x_{m1}$ zwischen dem antriebsseitig ermittelten Stellweg $x_{A1}$ und der tatsächlich gemessenen Position $x_{m1}$ der Masse m der Achse 1 berechnet. Diese Differenz $\Delta x$ wird einer weiteren Recheneinheit 13 zugeführt, die unter Berücksichtigung der Federkonstanten c den elastischen Anteil $\Delta x \cdot c$ der auf die Achse 1 wirkenden Kraft berechnet.

Die antriebsseitig ermittelte Stellgeschwindigkeit $v_{A1}$ wird dagegen einem Subtrahierer 14 zugeführt, der die Differenz $\Delta v = v_{A1} - v_{m1}$ zwischen der antriebsseitig ermittelten Stellgeschwindigkeit $v_{A1}$ und der tatsächlich gemessenen Geschwindigkeit der Masse m der Achse 1 berechnet. Diese Differenz $\Delta v$ wird dann einer Recheneinheit 15 zugeführt, die den durch die Getriebedämpfung verursachten Anteil der auf die Achse 1 wirkenden Kraft als Produkt aus der Dämpfungskonstanten $d_G$ und der Geschwindigkeitsdifferenz $\Delta v$ berechnet.

Ausgangsseitig sind die beiden Recheneinheiten 13, 15 mit einem Addierer 16 verbunden, der aus dem elastischen Anteil $c \cdot \Delta x$ und dem Dämpfungsanteil $d_G \cdot \Delta v$ den Vergleichswert $F_{L1}$ für die auf die Achse 1 wirkende Kraft berechnet.

Weiterhin weist die Überwachungseinrichtung 6 einen Subtrahierer 17 auf, der eingangsseitig mit dem Addierer 16 und der Recheneinheit 9 verbunden ist und die Differenz zwischen den beiden Vergleichswerten $F_{L1}$ und $F_{MODELL,1}$ berechnet und aus Fehlersignal $F_{STÖR,1}$ ausgibt.

Bei einer ungestörten Bewegung der Achse 1 stimmen die beiden Vergleichswerte $F_{L1}$ und $F_{MODELL,1}$ bis auf unvermeidliche Messfehler überein, da die Modellierung des dynamischen Verhaltens der Achse 1 deren tatsächliches Verhalten wiedergibt. Die Berechnung der auf die Achse 1 wirkenden Kraft $F_{L1}$ aus den antriebsseitig gemessenen Bewegungsgrößen $\omega_{A1}$ und $\varphi_{A1}$ liefert dann den gleichen Wert wie die Berechnung der auf die Achse 1 wirkenden Kraft $F_{MODELL,1}$ aus den lastseitig gemessenen Bewegungsgrößen $x_{M1}$ und $a_{M1}$.

Falls die Bewegung der Achse 1 dagegen gestört wird, so weichen die Vergleichswerte $F_{L1}$ und $F_{MODELL,1}$ voneinander ab, wobei die Abweichung dieser Größen die Stärke der Störung wiedergibt. So führt eine vergrößerte Lagerreibung nur zu einem relativ kleinen Fehlersignal $F_{STÖR,1}$, während eine Kollision der Achse 1 mit einer Begrenzung zu einem sehr großen Fehlersignal $F_{STÖR,1}$ führt.

Weiterhin ist zur Bewertung des Betriebsverhaltens für sämtliche Achsen eine Auswertungseinheit 18 vorgesehen, die eingangsseitig mit den einzelnen Überwachungseinrichtungen 6 für die einzelnen Achsen verbunden ist und die Fehlersignale $F_{STÖR,1}$ für sämtliche Achsen aufnimmt.

Die Auswertungseinheit 18 enthält ein Aufnahmeglied 19, das die Fehlersignale $F_{STÖR,1}$ für sämtliche Achsen parallel aufnimmt und als mehrdimensionalen Störkraftvektor $F_{STÖR}$ an eine Recheneinheit 20 weitergibt.

Die Recheneinheit 20 berechnet dann aus den einzelnen Komponenten des Störkraftvektors $F_{STÖR}$ einen skalaren Fehlerwert F, der die Stärke der auf den Lackierroboter wirkenden Störung wiedergibt.

Der Fehlerwert F des Störkraftvektor $F_{STÖR}$ wird dann einer Recheneinheit 21 zugeführt, die den gleitenden Mittelwert des Fehlerwerts F berechnet, um bei der Auswertung den Einfluss von Messausreissern zu unterdrücken. Die Mittlungsdauer der Recheneinheit 21 ist jedoch relativ kurz, damit plötzlich auftretende Störungen wie beispielsweise bei einer Kollision des Lackierroboters mit einem Hindernis schnell erkannt werden.

Ausgangsseitig ist die Recheneinheit 21 mit einem Schwellenwertglied 22 verbunden, da beim Überschreiten eines vorgegebenen Grenzwerts ein Not-Aus-Signal erzeugt, das zum sofortigen Anhalten des Lackierroboters führt, um Beschädigungen des Lackierroboters und der Umgebung oder gar Verletzungen von umstehenden Personen zu verhindern.

Darüber hinaus weist die Auswertungseinheit 18 einen weiteren Zweig auf, um auf langsamer auftretende und kleinere Störungen reagieren zu können. Hierzu ist die Recheneinheit 20 mit einer Recheneinheit 23 verbunden, die den gleitenden Mittelwert des Fehlersignals F berechnet, wobei die Recheneinheit 23 eine größere Mittlungsdauer aufweist, als die Recheneinheit 21, so dass nur länger andauernde Veränderungen berücksichtigt werden.

Ausgangsseitig ist die Recheneinheit 23 mit einem Schwellenwertglied 24 verbunden, das beim Überschreiten eines vorgegebenen Grenzwerts ein Warnsignal erzeugt.

Die Erfindung ist nicht auf das vorstehend beschriebene Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen.

**Patentansprüche**

1. Überwachungsverfahren für ein Antriebssystem eines Roboters, insbesondere eines Lackierroboters, mit einem Motor und einem von dem Motor angetriebenen beweglichen Teil, mit den folgenden Schritten:

   - Messung mindestens einer antriebsseitigen Bewegungsgröße ($\varphi_{A1}$, $\omega_{A1}$) des Motors,
   - Ermittlung mindestens einer abtriebsseitigen Bewegungsgröße ($x_{M1}$, $a_{M1}$) des beweglichen Teils,
   - Bestimmung eines Fehlersignals ($F_{STÖR}$) in Abhängigkeit von der antriebsseitig gemessenen Bewegungsgröße ($\varphi_{A1}$, $\omega_{A1}$) des Motors und von der abtriebsseitig gemessenen Bewegungsgröße ($x_{M1}$, $a_{M1}$) des beweglichen Teils,

   **gekennzeichnet durch durch** eine Messung der abtriebssseitigen Bewegungsgröße ($x_{M1}$, $a_{M1}$) und folgende Schritte:

   - Berechnung eines ersten Vergleichswerts ($F_{L1}$) für eine Antriebskraft oder ein Antriebsmoment des Motors anhand der antriebsseitig gemessenen Bewegungsgröße ($\varphi_{A1}$, $\omega_{A1}$) des Motors,
   - Berechnung eines zweiten Vergleichswerts ($F_{MODELL,1}$) für eine Antriebskraft oder ein Antriebsmoment des Motors anhand der abtriebsseitig gemessenen Bewegungsgröße ($x_{M1}$, $a_{M1}$) des beweglichen Teils,
   - Vergleich des ersten Vergleichswerts ($F_{L1}$) mit dem zweiten Vergleichswert ($F_{MODELL,1}$) ,
   - Erzeugung des Fehlersignals ($F_{STÖR}$) in Abhängigkeit von dem Vergleich.

2. Überwachungsverfahren nach Anspruch 1, **dadurch gekennzeichnet, dass** die Geschwindigkeit ($\omega_{A1}$) des Motors gemessen wird und der erste Vergleichswert ($F_{L1}$) anhand der gemessenen Geschwindigkeit ($\omega_{A1}$) des Motors berechnet wird.

3. Überwachungsverfahren nach Anspruch 1 und/oder Anspruch 2, **dadurch gekennzeichnet, dass** die Stellung ($\varphi_{A1}$) des Motors gemessen wird und der erste Vergleichswert ($F_{L1}$) anhand der gemessenen Stellung ($\varphi_{A1}$) des Motors berechnet wird.

4. Überwachungsverfahren nach mindestens einem der vorhergehenden Ansprüche, **dadurch gekennzeichnet, dass** die Stellung ($x_{M1}$), die Geschwindigkeit ($v_{M1}$) und/oder die Beschleunigung ($a_{M1}$) des beweglichen Teils gemessen wird und der zweite Vergleichswert ($F_{MODELL,1}$) für die Antriebskraft oder das Antriebsmoment des Motors anhand der gemessenen Stellung ($x_{M1}$), der gemessenen Geschwindigkeit ($v_{M1}$) und/oder der gemessenen Beschleunigung

($a_{M1}$) des beweglichen Teils berechnet wird.

5. Überwachungsverfahren nach mindestens einem der Ansprüche 1 bis 4, **dadurch gekennzeichnet, dass** der zweite Vergleichswert ($F_{MODELL,1}$) durch ein rekursives Rechenverfahren aus der gemessenen Stellung ($x_{M1}$), der gemessenen Geschwindigkeit ($v_{M1}$) und/oder der gemessenen Beschleunigung ($a_{M1}$) des beweglichen Teils berechnet wird.

6. Überwachungsverfahren nach mindestens einem der vorhergehenden Ansprüche, **dadurch gekennzeichnet, dass** das Antriebssystem mehrere bewegliche Achsen aufweist, wobei die Stellung ($\varphi_{A1}$), die Geschwindigkeit ($\omega_{A1}$) und/oder die Beschleunigung des Motors für die einzelnen Achsen gemessen wird, wobei der erste Vergleichswert ($F_{L1}$) getrennt für die einzelnen Achsen bestimmt wird.

7. Überwachungsverfahren nach mindestens einem der vorhergehenden Ansprüche, **dadurch gekennzeichnet, dass** das Antriebssystem mehrere bewegliche Achsen aufweist, wobei die Stellung ($x_{M1}$), die Geschwindigkeit ($v_{M1}$) und/oder die Beschleunigung ($a_{M1}$) des beweglichen Teils in den einzelnen Achsen gemessen wird und der zweite Vergleichswert ($F_{MODELL,1}$) getrennt für jede Achse berechnet wird.

8. Überwachungsverfahren nach Anspruch 6, **dadurch gekennzeichnet, dass** der zweite Vergleichswert ($F_{MODELL,1}$) für die einzelnen Achsen in Abhängigkeit von der Stellung ($x_{M1}$), der Geschwindigkeit ($v_{M1}$) und/oder der Beschleunigung ($a_{M1}$) des beweglichen Teils in mehreren Achsen bestimmt wird.

9. Überwachungsverfahren nach mindestens einem der vorhergehenden Ansprüche, **dadurch gekennzeichnet, dass** das Fehlersignal ($F_{STÖR}$) getrennt für jede Achse des Antriebssystems bestimmt wird.

10. Überwachungsverfahren nach mindestens einem der vorhergehenden Ansprüche, **dadurch gekennzeichnet, dass** der gleitende Mittelwert des Fehlersignals ($F_{STÖR}$) bestimmt wird.

**Claims**

1. A monitoring method for a drive system of a robot, particularly a painting robot, with a motor and a movable part driven by the motor, with the following steps:

   - Measuring at least one drive-side motion quantity ($\varphi_{A1}$, $\omega_{A1}$) of the motor;
   - determining at least one driven-side motion quantity ($x_{M1}$, $a_{M1}$) of the movable part; and
   - determining an error signal ($F_{STÖR}$) depending on the motion quantity ($\varphi_{A1}$, $\omega_{A1}$) of the motor measured on the drive-side and the motion quantity ($x_{M1}$, $a_{M1}$) of the movable part measured on the driven side,

   **characterized by** a measurement of the driven-side motion quantity ($x_{M1}$, $a_{M1}$) and the following steps:

   - calculating a first comparison value ($F_{L1}$) for a drive force or a drive moment of the motor on the basis of the motion quantity ($\varphi_{A1}$, $\omega_{A1}$) of the motor measured on the drive side;
   - calculating a second comparison value ($F_{MODELL,1}$) for a drive force or a drive moment of the motor on the basis of the quantity ($x_{M1}$, $a_{M1}$) of the movable part measured on the driven side;
   - comparing the first comparison value ($F_{L1}$) with the second comparison value ($F_{MODELL,1}$) ; and
   - generating the error signal ($F_{STÖR}$) depending on the comparison.

2. The monitoring method according to claim 1, wherein the velocity ($\omega_{A1}$) of the motor is measured and the first comparison value ($F_{L1}$) is calculated on the basis of the measured velocity ($\omega_{A1}$).

3. The monitoring method according to claim 1 and/or 2 claim 2, wherein the position ($\varphi_{A1}$) of the motor is measured and the first comparison value ($F_{L1}$) is calculated on the basis of the measured position ($\varphi_{A1}$) of the motor.

4. The monitoring method according to any of the preceding claims, wherein the position ($x_{M1}$), the velocity ($v_{M1}$) and/or the acceleration ($a_{M1}$) of the movable part is measured and the second comparison value ($F_{MODELL,1}$) is calculated for the drive force or the drive moment of the motor on the basis of the measured position ($x_{M1}$) , the measured velocity ($v_{M1}$) and/or the measured acceleration ($a_{M1}$) of the movable part.

**5.** The monitoring method according to any of claims 1 to 4, wherein the second comparison value ($F_{MODELL,1}$) is calculated by a recursive computational method from the measured position ($x_{M1}$), the measured velocity ($v_{M1}$) and/or the measured acceleration ($a_{M1}$) of the movable part.

**6.** The monitoring method according to any of the preceding claims, wherein the drive system has a plurality of movable axes, wherein the position ($\varphi_{A1}$), the velocity ($\omega_{A1}$) and/or the acceleration of the motor being measured for the individual axes, wherein the first comparison value ($F_{L1}$) is calculated separately for the individual axes.

**7.** The monitoring method according to any of the preceding claims, wherein the drive system has a plurality of movable axes, wherein the position ($x_{M1}$), the velocity ($v_{M1}$) and/or the acceleration ($a_{M1}$) of the movable part is measured for the individual axes, wherein the second comparison value ($F_{MODELL,1}$) is calculated separately for the individual axes.

**8.** The monitoring method according to claim 6, wherein the second comparison value ($F_{MODELL,1}$) for the individual axes is calculated as a function of the position ($x_{M1}$), the velocity ($v_{M1}$) and/or the acceleration ($a_{M1}$) of the movable part in several of axes.

**9.** The monitoring method according to any of the preceding claims, wherein the error signal ($F_{STÖR}$) is generated separately for each axis of the drive system.

**10.** The monitoring method according to any of the preceding claims, wherein the sliding mean value of the error signal ($F_{STÖR}$) is determined.


**Revendications**

**1.** Procédé de surveillance pour un système d'entraînement d'un robot, plus particulièrement d'un robot de peinture, avec un moteur et une partie mobile entraînée par le moteur, avec les étapes suivantes :

- mesure d'au moins une grandeur de mouvement du côté de l'entraînement ($\varphi_{A1}$, $\omega_{A1}$) du moteur,
- détermination d'au moins une grandeur de mouvement du côté de l'entraînement ($x_{M1}$, $a_{M1}$) de la partie mobile,
- détermination d'un signal d'erreur ($F_{stör}$) en fonction de la grandeur de mouvement mesurée du côté de l'entraînement ($\varphi_{A1}$, $\omega_{A1}$) du moteur et de la grandeur de mouvement mesurée du côté de l'entraînement ($x_{M1}$, $a_{M1}$) de la partie mobile,

**caractérisé par** une mesure de la grandeur de mouvement du côté de l'entraînement ($X_{M1}$, $a_{M1}$) et les étapes suivantes :

- calcul d'une première valeur de comparaison ($F_{L1}$) pour une force d'entraînement ou un couple d'entraînement du moteur à l'aide de la grandeur de mouvement mesurée du côté de l'entraînement ($\varphi_{A1}$, $\omega_{A1}$) du moteur,
- calcul d'une deuxième valeur de comparaison ($F_{MODELL,1}$) pour une force d'entraînement ou un couple d'entraînement du moteur à l'aide de la grandeur de mouvement mesurée du côté de l'entraînement ($x_{M1}$, $a_{M1}$) de la partie mobile,
- comparaison de la première valeur de comparaison ($F_{L1}$) avec la deuxième valeur de comparaison ($F_{MODELL,1}$),
- génération du signal d'erreur ($F_{stör}$) en fonction de la comparaison.

**2.** Procédé de surveillance selon la revendication 1, **caractérisé en ce que** la vitesse ($\omega_{A1}$) du moteur est mesurée et la première valeur de comparaison ($F_{L1}$) est calculée à l'aide de la vitesse mesurée ($\omega_{A1}$) du moteur.

**3.** Procédé de surveillance selon la revendication 1 et/ou la revendication 2, **caractérisé en ce que** la position ($\varphi_{A1}$) du moteur est mesurée et la première valeur de comparaison ($F_{L1}$) est calculée à l'aide de la position mesurée ($\varphi_{A1}$) du moteur.

**4.** Procédé de surveillance selon au moins une des précédentes revendications, **caractérisé en ce que** la position ($x_{M1}$), la vitesse ($v_{M1}$) et/ou l'accélération ($a_{M1}$) de la partie mobile est mesurée et la deuxième valeur de comparaison ($F_{MODELL,1}$) pour la force d'entraînement ou le couple d'entraînement du moteur est calculée à l'aide de la position mesurée ($x_{M1}$), de la vitesse mesurée ($v_{M1}$) et/ou de l'accélération mesurée ($a_{M1}$) de la partie mobile.

**5.** Procédé de surveillance selon au moins une des revendications 1 à 4, **caractérisé en ce que** la deuxième valeur de comparaison ($F_{MODELL,1}$) est calculée à l'aide d'une méthode de calcul récursive à partir de la position mesurée ($x_{M1}$), de la vitesse mesurée ($v_{M1}$) et/ou de l'accélération mesuré ($a_{M1}$) de la partie mobile.

**6.** Procédé de surveillance selon au moins une des précédentes revendications, **caractérisé en ce que** le système d'entraînement comprend plusieurs axes mobiles, la position ($\varphi_{A1}$), la vitesse ($\omega_{A1}$) et/ou l'accélération du moteur étant mesurée pour les différents axes, la première valeur de comparaison ($F_{L1}$) étant déterminée séparément pour les différents axes.

**7.** Procédé de surveillance selon au moins une des précédentes revendications, **caractérisé en ce que** le système d'entraînement comprend plusieurs axes mobiles, la position ($x_{M1}$), la vitesse ($v_{M1}$) et/ou l'accélération ($a_{M1}$) de la partie mobile étant mesurée sur les différents axes et la deuxième valeur de comparaison ($F_{MODELL,1}$) étant calculée séparément pour chaque axe.

**8.** Procédé de surveillance selon la revendication 6, **caractérisé en ce que** la deuxième valeur de comparaison ($F_{MODELL,1}$) est déterminée pour les différents axes en fonction de la position ($x_{M1}$), de la vitesse ($v_{M1}$) et/ou de l'accélération ($a_{M1}$) de la partie mobile sur plusieurs axes.

**9.** Procédé de surveillance selon au moins une des précédentes revendications, **caractérisé en ce que** le signal d'erreur ($F_{STÖR}$) est déterminé séparément pour chaque axe du système d'entraînement.

**10.** Procédé de surveillance selon au moins une des précédentes revendications, **caractérisé en ce que** la valeur moyenne glissante du signal d'erreur ($F_{STÖR}$) est déterminée.

Fig. 1

Fig. 2

Warnung

Notaus

$F$

ABS

20

24

23

22

21

$F_{STÖR}$

19

18

$F_{STÖR,i}$
für alle i>1

$F_{L1}$

$F_{STÖR,1}$

13

16

c

15

$d_G$

$F_{MODELL,1}$

9

17

$x_{Mi}, v_{Mi}, a_{Mi}$
für alle i>1

$\Delta x$

$\Delta v$

$x_{M1}$

$v_{M1}$

$a_{M1}$

12

14

8

$x_{A1}$

$v_{A1}$

d/dt

10

11

$1/i_G$

$1/i_G$

6

$\varphi_{A1}$

$\omega_{A1}$

$x_{M1}$

$a_{M1}$

7.1

7.2

7.3

7.4

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9851453 A
- JP 2000052286 A
- JP 2001051721 A
- JP 2000099105 A

**In der Beschreibung aufgeführte Nicht-Patentliteratur**

- **FEATHERSTONE, ROY.** Robot Dynamics Algorithms. Kluwer Academic Publishers, 1987